# EUROPEAN PATENT SPECIFICATION

(11) **EP 1 221 285 B1**
(45) Date of publication and mention of the grant of the patent: **22.10.2003**
(21) Application number: 01830003.8
(22) Date of filing: 05.01.2001
(51) Int. Cl.: A22C 17/00, A23P 1/00, A23L 1/317, A23L 1/31

(54) **Method of producing spitfuls of foodstuff automatically**
Verfahren zur automatischen Herstellung von Bratspiessen
Procédé de fabrication automatique des brochettes

(43) Date of publication of application: 10.07.2002
(73) Proprietor: Vitileia, Nicolino, 65010 Collecorvino (PE) (IT)
(72) Inventor: Vitileia, Nicolino, 65010 Collecorvino (PE) (IT)
(74) Representative: Sarpi, Maurizio

(56) References cited:
- WO-A-97/03572
- US-A- 4 893 553
- US-A- 5 740 722
- US-A- 6 161 471
- DATABASE WPI Section Ch, Week 199805 Derwent Publications Ltd., London, GB; Class D13, AN 1998-045090 XP002173373 & HU 75 509 A (BABOLNA BAROMFI KECSKEMET FELD), 28 May 1997 (1997-05-28)

## Description

The present invention relates to the production of foodstuff, particularly spitfuls of meat or other foods.

Spitfuls of roast meat (also called brochette or kebab) are well known on the foodstuff market and are formed of foods essentially diced to small cubes or blocks and pierced by sticks or spits of wood, metal or other suitable material. The food pierced by the spits may be meat, fish, cheese, fruit, vegetables and except for the fruit may be cooked in different ways and served hot.

Presently, as set forth in greater detail thereafter, the production of such spitfuls can fully or partially pertain to handicraft or be partially mechanized.

The handicraft production merely consists of dicing the food to small cubes or blocks and piercing such small cubes one by one by sticks. It is self-evident that in such case the spitfuls are different from one another both as far as layering, compactness and weight is concerned.

The handicraft production allows personalized spits to be prepared by practically infinite combinations of recipes consisting of a variety of products which alternate on the same sticks. Additionally, there is almost no waste as all of the pieces that can be pierced are used.

A heavy drawback of the handicraft preparation, however, is due to the high production cost, especially in countries where the labour has high cost.

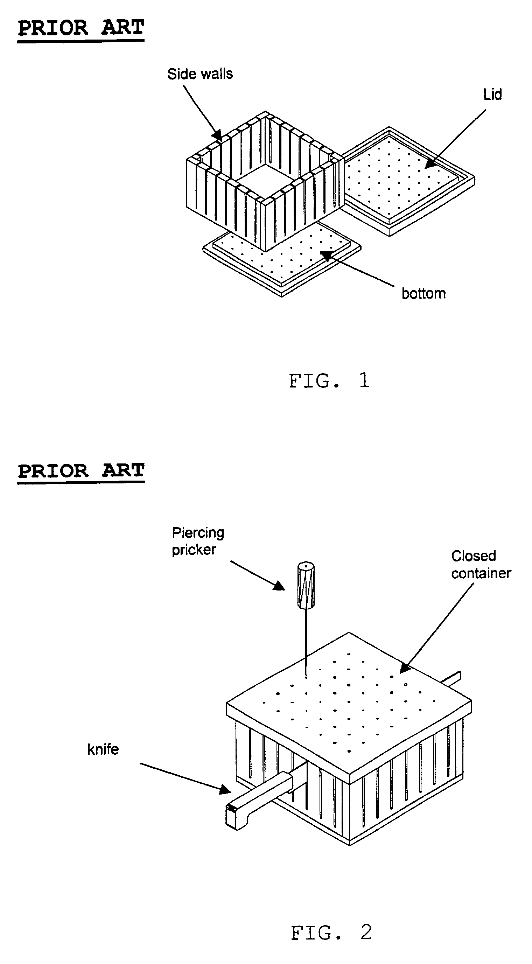

Referring to Figures 1 and 2 described thereafter, the partial handicraft production provides the use of special parallelepiped containers having side walls provided with vertical slots and a lid and a bottom provided with a hole matrix. In such case, the foodstuff to be pierced by the spits is sliced and layered within the above containers so that the inside thereof is nearly completely filled. Once a container is filled and closed by the lid, the inside layers are pierced by a pricker at the holes of lid and bottom.

After the end of such operation, the spits are driven into the holes and then into the layers of foodstuffs.

Thereafter, the layers are vertically cut by a blade inserted into the side slots and guided downwards from the top. After the end of such operation performed along two directions orthogonal to each other, the lid is removed and the spits are taken out.

Even if such a preparation excludes the need of dicing preliminarily the foodstuff to small cubes or blocks and allows the threading of the spits and the cutting of the foodstuff to be speeded up, the possibility of personalizing the spits is drastically restricted as the single layers of foodstuff should be cut before the container is filled.

Moreover, the preparation of the slices and the filling of the container requires labour with cost comparable to the dicing to small cubes by handicraft methods. Waste is also considerable because of the irregular shape of the slices. At last, the threading of food with a determined shape such as sausage, hot dog, vegetables has then to be made by hand. Also in such case cost of labour is high.

A different known method of producing spitfuls of foodstuff is a partially mechanized method exhibiting only a part of the handicraft operations carried out mechanically. In fact, containers equal or similar to those described above have to be filled by hand, and the final waste is essentially the same.

In other words, the above mechanization consists in that the preliminary piercing, threading by the spits, cutting as well as removing of all of the spits to be checked one by one are carried out automatically.

It is self-evident that such a preparation guarantees high output per hour and greater homogeneity of the end product. However, the drawbacks are essentially the same as the partial handicraft preparation, and the production cost is still high because of the need of labour for filling the containers by hand.

As can be seen from the foregoing, the main problem to be overcome for lowering the production cost is the filling of the containers with layers of foodstuff which are then pierced, threaded by the spits and diced to small cubes, with the result of a high waste of raw material.

The purpose of reducing the labour necessary for forming the containers could be achieved if it would be possible to load the containers with foodstuff of different size mechanically and in bulk so as to guarantee a clear layering of the various foodstuff of the end product, with each layer remaining attached to the spit.

Actually, some attempts were made with minced meat bound with collagen or enzymes but the end product had not the required attractive aspect mainly because of the lack of distinct layers.

It is also known, from US-A-5 740 722, a method for producing spitfuls wherein the foodstuff is cut to pieces of irregular size with the result of a high waste of raw material, therefore it is necessary to form the spits by hand and not mechanically.

Furthermore, from DATABASE WPI AN 98-045090 XP002173373 & HU 75 509 (BABOLNA BAROMFI KECSKEMET FELD) 28/05/1997, it is known a method for producing meatballs dipped in breadcrumbs, but a disadvantage of this method it that such meatballs are not suitable to be mechanically and automatically worked on order to fill the containers of the spitful production machines.

The main object of the invention, therefore, is to overcome all of the problems and drawbacks of the prior art by providing a method of producing spitfuls of foodstaff in which the filling of the containers of the spitful production machine is made with a preformed, pre-cooked foodstuff having such a shape and such a thickness as to allow the containers to be filled completely and automatically.

A second object of the invention is to provide a method of producing a preformed, pre-cooked foodstuff to be used for filling the containers of the spitful production machine with layers having different compositions and tastes, if necessary, alternated with layers of cheese or other suitable products.

These and other objects of the invention will be more readily understood from the following detailed description with reference to the accompanying drawings that show a preferred embodiment thereof only by way of example.

In the drawings:
Figures 1 and 2 show a container for the production of spitfuls of foodstuff by a partially handicraft method or a partially mechanized method;

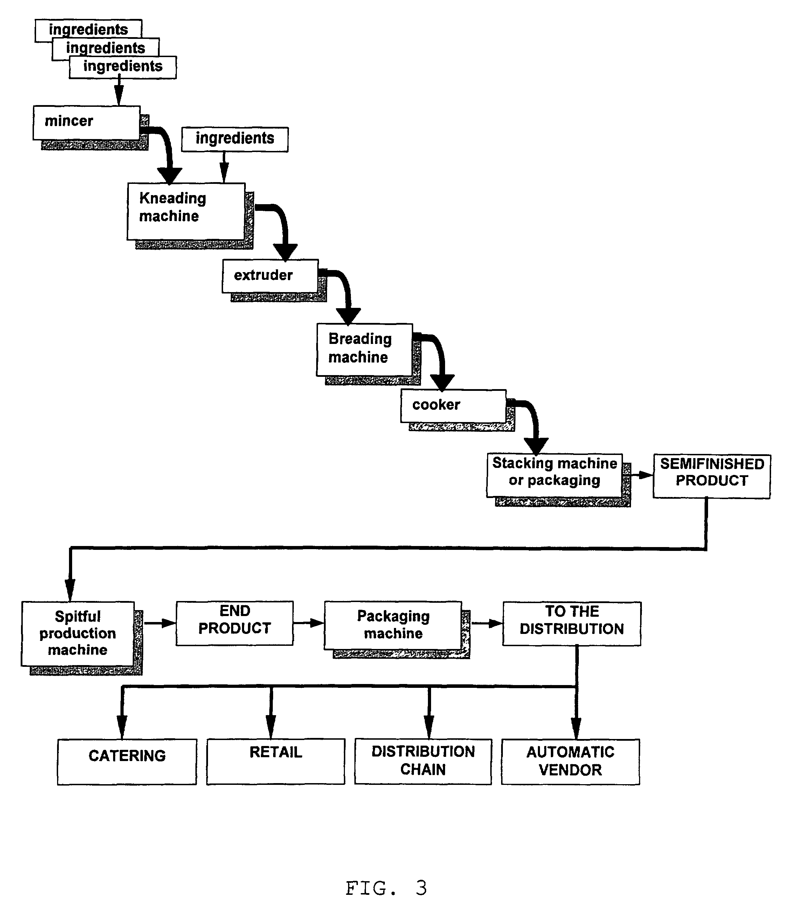

Figure 3 shows a flow chart of the method according to the present invention.

The method of the present invention consists essentially of providing meat-balls or blocks or loaves having preferably rectangular, square or circular shapes and constant or varying thicknesses and containing foodstuff prepared according to a determined recipe, which are covered with bread crumbs and pre-cooked so that they can be worked mechanically (as well as by hand) in order to fill automatically the containers of the spitful production machine which pierces preliminary the layered foodstuff, threads it by the spits, dices the layers to small cubes, and takes the end spitfuls out for the final packaging.

Furthermore, according to the invention, the production machines for carrying out the described method are different from those for the partially mechanized production in that, once the foodstuff blocks or loaves are prepared, the filling of the containers is carried out automatically and not by hand.

In particular, the described method includes the following steps:
1. preparing the foodstuff mixture capable of forming the meat loaf or ball which will form a single layer with the desired granulometry;
2. kneading the minced foodstuff with the addition, if necessary, of flavours, spices and/or other granulated and/or liquid products;
3. extruding the homogeneous mixture obtained so as to provide a compact "band" with a width similar to the inside width of the already described containers and a varying height according to the die head or matrix used;
4. forming the blocks or loaves of homogeneous minced foodstuff from the "band" of minced product coming out of the die head which is cut or formed by pressing according to the inside width of the container to be filled;
5. covering the blocks or loaves obtained with bread crumbs after having soaked them in liquid batter;
6. pre-cooking the blocks or loaves covered with bread crumbs so that once cooled they acquire a sufficient consistency such as to allow the manual and/or mechanical preparation;
7. filling mechanically the containers for the production of spitfuls with the pre-cooked blocks or loaves covered with bread crumbs, or storing the blocks or loaves in suitable containers for the next storing in a refrigerator or the deep-freezing.

Therefore, according to the present invention, the production of spitfuls can be carried out by filling mechanically and automatically the containers described above having pierced bases and walls provided with vertical slots.

Alternately, still according to the invention, the above-mentioned blocks or loaves can be stored in a refrigerator or deep-frozen to be used thereafter to produce spitfuls from foodstuff in a fully automatic fashion.

It is apparent from the foregoing that all of the problems connected to the filling of the containers for the production of spitfuls, that would be made by hand according to the prior art, are overcome by the mechanized method described. In fact, once said blocks or loaves are covered with crumbs and pre-cooked, the containers can be filled mechanically and the spitfuls can be produced in the known manner by using the already existing machines.

The filling of the container for the production of spitfuls is easily carried out by superimposing the layers formed of the single blocks also prepared according to different recipes. The layers can also be formed by alternating blocks prepared according to the same or different recipes with blocks consisting of other suitably cut foodstuff such as cheese or sliced ham or sandwich loaf.

The spitfuls obtained according to the invention have a layered aspect which shows clearly the several ingredients; moreover, they have a regular, steady shape also during cooking and a weight and a calorie content which can be determined and exactly declared.

Advantageously, such spitfuls can be sold by retail, distribution chains, catering, etc., in packages under inert atmosphere or can be refrigerated or deep-frozen. The spitfuls can also be sold by refrigerated automatic vendors provided with grill and/or microwave oven and/or frying machine for the delivery of a hot-cooked product to customers.

## Claims

1. A method of producing spitfuls automatically by spitful production machines, in which the filling of the containers of the type used in the known spitful production machines is made with a foodstuff which is preformed such as to allow the containers to be completely filled with automatically superimposed layers **characterized in that** it comprises the following steps of phases:
a) preparing the foodstuff mixture capable of forming the meat loaf or ball which will form a single layer with the desired granulometry;
b) kneading the minced foodstuff with the addition, if necessary, of flavours, spices and/or other granulated and/or liquid products;
c) forming the blocks or loaves of homogeneous minced foodstuff according to the inside width of the container to be filled;
d) covering the blocks or loaves obtained with bread crumbs after having soaked them in liquid batter;
e) pre-cooking the blocks or loaves covered with bread crumbs so that once cooled they acquire a sufficient consistency such as to allow the manual and/or mechanical preparation;
f) filling mechanically the containers for the production of spitfuls with the pre-cooked blocks or loaves covered with bread crumbs, or storing the blocks or loaves in suitable containers for the next storing in a refrigerator or the deep-freezing.

2. The method of claim 1, **characterized in that** said foodstuff is made in the form of balls or blocks or loaves containing food prepared according to a determined recipe and covered with crumbs and pre-cooked so that they can be worked mechanically in order to fill automatically on one another the containers of the spitful production machine which is capable of piercing preliminary the layered foodstuff, threading it by the spits, dicing the layers to small cubes, and taking the end spitfuls out for the final packaging.

3. The method of the preceding claim, **characterized in that** said blocks or loaves have a rectangular, square or circular shape and a constant or varying thickness.

4. The method of claim 1, **characterized in that** the phase c) is constituted by the following steps:
I) extruding the homogeneous mixture obtained so as to provide a compact band with a width similar to the inside width of said containers and a height varying according to the used die head or matrix or according to the die shape;
II) forming the blocks or loaves of homogeneous minced foodstuff from the band of minced product coming out of the die head which is cut according to the inside width of the container to be filled.

5. The method of one or more of the preceding claims, **characterized in that** the filling of the container for the production of spitfuls is easily carried out by superimposing the layers formed of the single blocks also prepared according to different recipes.

6. The method of one or more of the preceding claims, **characterized in that** the layers can also be formed by alternating blocks prepared according to the same or different recipes with blocks consisting of other suitably cut foodstuff such as cheese or sliced ham or sandwich loaf, thus obtaining spitfuls with a layered aspect which shows clearly the several ingredients, a regular, steady shape also during cooking and a weight and a calorie content which can be determined and exactly declared.

## Patentansprüche

1. Verfahren zur automatischen Herstellung von Bratspießen durch Bratspieß-Herstellungsgeräte, bei welcher die Füllung von Behältern derart, wie sie in bekannten Bratspieß-Herstellungsgeräten verwendet werden, mit Nahrungsmitteln vorgenommen wird, was so ausgeführt wird, dass es den Behältern erlaubt ist, vollständig mit automatisch aufeinander gelegten Schichten gefüllt zu werden, **dadurch gekennzeichnet, dass** es die folgenden Schritte der Phasen umfasst:
a) Vorbereiten der Nahrungsmittelmischung zum Ausbilden des Fleischkäses oder Fleischballs, welcher eine einzelne Schicht mit der gewünschten Körnigkeit ausbilden wird;
b) Kneten des gehackten Nahrungsmittels mit der Hinzufügung von, falls nötig, Aromen, Gewürzen und/oder anderen granulierten und/oder flüssigen Produkten;
c) Ausbilden der Blöcke oder Laibe von homogen gehackten Lebensmitteln gemäß der Innenseitenbreite des zu füllenden Behälters;
d) Bedecken der Blöcke oder Laibe, welche erhalten werden, mit Brotkrumen, nachdem sie in flüssigem aufgeschlagenem Ei eingeweicht sind;
e) Vorkochen der Blöcke oder Laibe, welche mit Brotkrumen bedeckt sind, so dass diese, einmal abgekühlt, eine ausreichende Konsistenz derart annehmen, dass eine manuelle und/oder mechanische Präparation möglich ist;
f) mechanisches Füllen der Behälter für die Herstellung von Bratspießen mit den vorgekochten Blöcken oder Laiben, welche mit Brotkrumen bedeckt sind, oder Lagern der Blöcke oder Laibe in geeigneten Behältern für die weitere Lagerung in einem Kühlschrank oder dem Tiefkühlen.

2. Verfahren gemäß Anspruch 1, **dadurch gekennzeichnet, dass** die Nahrungsmittel in die Form von Bällen oder Blöcken oder Laiben gebracht werden, welche Nahrung enthalten, welche gemäß einem vorbestimmten Rezept zubereitet sind und mit Krumen bedeckt sind und vorgekocht sind, so dass sie mechanisch bearbeitet werden können, um automatisch aufeinander die Behälter des Bratspieß-Herstellungsgeräts zu füllen, welches in der Lage ist, vorläufig die Nahrungsmittel in Schichten zu durchstechen, wobei es durch die Spieße aufgefädelt wird, Würfeln der Schichten zu kleinen Würfeln, und Herausnehmen der Enden der Bratspieße für das abschließende Verpacken.

3. Verfahren nach dem vorhergehenden Anspruch, **dadurch gekennzeichnet, dass** die Blöcke oder Laibe eine rechtwinklige, quadratische oder kreisförmige Form und eine konstante oder variierende Dicke aufweisen.

4. Verfahren gemäß Anspruch 1, **dadurch gekennzeichnet, dass** die Phase c) sich aus den folgenden Schritten zusammensetzt:
I) Extrudieren der homogenen Mischung, die so erhalten wird, um ein kompaktes Band mit einer Breite gleich der Innenseitenbreite des Behälters und einer Höhe vorzusehen, welche gemäß dem verwendeten Extrusionskopf oder der Extrusionsmatrix oder gemäß der Extrusionsform variiert;
II) Ausbilden der Blöcke oder Laibe von homogen gehacktem Nahrungsmittel aus dem Band des gehackten Produkts, welches aus dem Extrusionskopf kommt, welches gemäß der Innenseitenbreite des zu befüllenden Behälters geschnitten wird.

5. Verfahren nach einem oder mehreren der vorhergehenden Ansprüche, dadurch gekennzeichnct, dass das Füllen des Behälters für die Herstellung von Bratspießen leicht ausgeführt wird durch Überlagern der Schichten, die aus den einzelnen Blöcken, auch zubereitet gemäß unterschiedlichen Rezepten, ausgebildet werden.

6. Verfahren nach einem oder mehreren der vorhergehenden Ansprüche, **dadurch gekennzeichnet, dass** die Schichten auch durch sich abwechselnde Blöcke gebildet werden können, die gemäß dem gleichen oder unterschiedlichen Rezepten zubereitet sind, mit Blöcken, welche aus anderen geeignet geschnittenen Lebensmitteln, wie etwa Käse oder geschnittener Schinken oder einem Sandwich-Laib, bestehen, wodurch Bratspieße mit einer geschichteten äußeren Erscheinung erhalten werden, welche deutlich die verschiedenen Zutaten, eine gleichmäßige, durchgehende Form auch während dem Kochen und ein Gewicht und einen Kalorieninhalt zeigt, welcher bestimmt und exakt ausgewiesen werden kann.

## Revendications

1. Un procédé pour produire des brochettes de façon automatique au moyen de machines de production de brochettes, dans lequel le remplissage des conteneurs du type utilisé dans les machines de production de brochettes connues est réalisé avec des aliments qui sont préformés de telle sorte que les conteneurs soient complètement remplis par des couches superposées automatiquement, **caractérisé en ce qu'**il comprend les phases suivantes :
a) la préparation du mélange d'aliments susceptibles de former le pain de viande ou la boulette de viande qui formera une unique couche ayant la granulométrie souhaitée ;
b) le pétrissage des aliments hachés avec l'addition, si nécessaire, de parfums, d'épices et/ou d'autres produits en grains et/ou liquides ;
c) la formation des blocs ou des pains d'aliments hachés homogènes conformément à la largeur interne du conteneur à remplir ;
d) le recouvrement des blocs ou des pains obtenus avec des miettes de pain après les avoir trempées dans une pâte à frire liquide ;
e) la pré-cuisson des blocs ou des pains recouverts de miettes de pain de telle sorte qu'une fois refroidis, ils acquièrent une consistance suffisante pour permettre la préparation manuelle et/ou mécanique ;
f) le remplissage mécanique des conteneurs pour la production de brochettes avec les blocs ou pains précuits recouverts de chapelure, ou le stockage des blocs ou des pains dans des conteneurs adaptés pour le stockage ultérieur dans un réfrigérateur ou pour la congélation.

2. Le procédé selon la revendication 1, **caractérisé en ce que** lesdits aliments sont préparés sous la forme de boulettes, de blocs ou de pains composés de denrées préparées selon une recette prédéterminée, recouvertes de chapelure et précuites de telle sorte qu'on puisse opérer mécaniquement afin de remplir de façon automatique l'un sur l'autre les conteneurs de la machine de production de brochettes, laquelle est préalablement capable de percer les aliments formés en couches, de les enfiler sur les broches, de couper les couches en petits dés et de retirer les brochettes terminées pour l'emballage final.

3. Le procédé selon la revendication précédente, **caractérisé en ce que** lesdits blocs ou pains présentent une forme rectangulaire, carrée ou ronde, et une épaisseur constante ou variable.

4. Le procédé selon la revendication 1, **caractérisé en ce que** la phase c) est constituée par les étapes suivantes :
I) l'extrusion du mélange homogène obtenu de manière à fournir une bande compacte ayant une largeur similaire à la largeur interne desdits conteneurs et une hauteur qui varie conformément à la tête ou à la matrice du dé utilisé ou conformément à la forme du dé ;
II) la formation des blocs ou des pains d'aliments homogènes hachés à partir de la bande de produit haché qui sort de la tête du dé et qui est coupée conformément à la largeur interne du conteneur à remplir.

5. Le procédé selon une ou plusieurs des revendications précédentes, **caractérisé en ce que** le remplissage du conteneur pour la production de brochettes est réalisé aisément en superposant les couches formées des blocs uniques également préparés conformément à différentes recettes.

6. Le procédé selon une ou plusieurs des revendications précédentes, **caractérisé en ce que** les couches peuvent également être formées en alternant des blocs préparés conformément à des recettes identiques ou différentes, avec des blocs constitués par d'autres aliments convenablement coupés tels que du fromage ou du jambon coupé en tranches ou du pain pour sandwichs, permettant ainsi l'obtention de brochettes se présentant sous la forme de couches qui montrent clairement les différents ingrédients, une forme régulière et stable, même pendant la cuisson, ainsi qu'un poids et une teneur en calories qui peuvent être déterminés et précisément déclarés.
